# EUROPEAN PATENT APPLICATION

(11) **EP 1 722 456 A1**
(43) Date of publication of application: **15.11.2006**
(21) Application number: 05710396.2
(22) Date of filing: 18.02.2005
(51) Int. Cl.: H02K 1/27, H02K 1/22, H02K 29/00

(54) **ROTOR FOR BRUSHLESS MOTOR**

(30) Priority: 25.02.2004 JP 2004050370
(71) Applicant: Mitsuba Corporation, Kiryu-shi, Gunma 376-8555 (JP)
(72) Inventor: OKUBO, Masayuki c/o Mitsuba Corporation, Kiryu-shi, Gunma 3768555 (JP)
(74) Representative: HOFFMANN EITLE
(86) International application number: PCT/JP2005/002563
(87) International publication number: WO 2005/081381

(57) **Abstract**

[PROBLEMS] A magnet is magnetized in a stable magnetizing magnetic field to reduce inertia of a brushless motor without degrading motor characteristics.

[MEANS FOR SOLVING PROBLEMS] A hollow cylindrical rotor core 6 is installed on a shaft 5, and magnets 2 with a circular arc cross section are installed on the outer peripheral surface of the rotor core 6. The rotor core 6 has an outer ring section 12 having a thickness Wr from the outer peripheral surface to the shaft 5 side, ribs 13 formed inside the outer ring section 12 and extending from the inner peripheral surface 12a of the outer ring section to the shaft 5 side, and hollow sections 14 formed between the ribs 13. The outer diameter ϕn of the hollow sections 14 is set in the range of ϕc - 2 × 3 Wt ≤ ϕn ≤ ϕc - 2 × 1.3 Wt, with ϕc being the outer diameter of the rotor core 6 and Wt being the thickness of the magnets 2.

## Description

### Technical Field

The present invention relates to a rotor to be used for a brushless motor and, more particularly, it relates to a rotor to be used for a brushless motor that is designed to reduce inertia without degrading the motor characteristics.

### Background Art

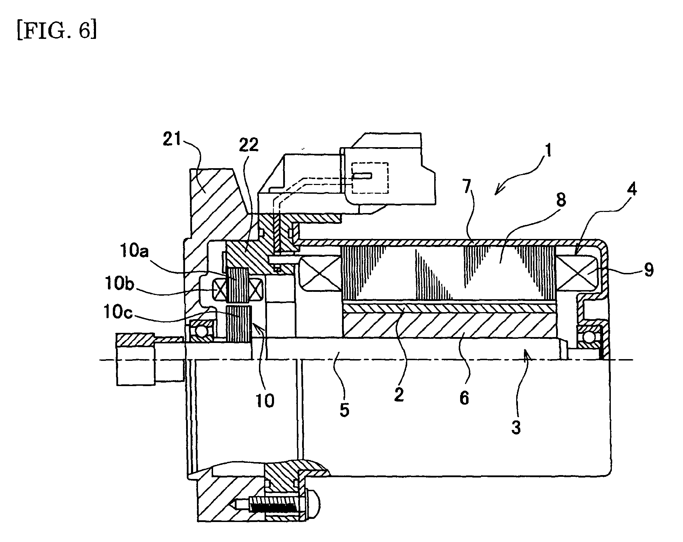

Brushless motors have been and being popularly used as drive sources for the electric equipment of automobiles such as electric power steering systems (to be referred to as EPS hereinafter). FIG. 6 of the accompanying drawings illustrates the commonly used structure of such a brushless motor. Referring to FIG. 6, the brushless motor 1 (to be referred simply as motor 1 hereinafter) is of the so-called inner rotor type and comprises a rotor 3 having magnets 2 operating as field poles and a stator 4 arranged around the rotor 3.

The rotor 3 is formed by using a rotor core 6 fitted to a metal-made shaft 5 and a plurality of magnets 2 rigidly secured to the outer periphery of the rotor core 6. The stator 4, on the other hand, is formed by using a housing 7, a stator core 8 rigidly secured to the inner periphery of the housing 7 and a coil winding 9 formed by winding a wire around the stator core 8. A plurality of teeth are projecting from the inner periphery of the stator core 8 and the coil winding 9 is formed by winding a wire through the slots formed by the teeth.

A die cast bracket 21 of aluminum is fitted to an open end of the housing 7. A resolver mount unit 22 that is made of synthetic resin is interposed between the bracket 21 and the housing 7. A ring-shaped resolver stator 10a is fitted to the resolver mount unit 22. A coil 10b is formed around the resolver stator 10a by a wire wound around the latter, thus an exciting coil and a detector coil are provided.

A resolver rotor 10c is arranged in the inside of the resolver stator 10a and rigidly secured to the shaft 5. Thus, a resolver 10 is formed by the resolver rotor 10c and the resolver stator 10a. The resolver rotor 10c is formed by laying metal plates to produce projections projecting in three directions. As the shaft 5 rotates, the resolver rotor 10c also rotates in the resolver stator 10a. A high frequency signal is applied to the exciting coil of the resolver stator 10a and the phase of the signal output from the detector coil changes as the projections move toward and away from the detector coil. The rotary position of the rotor 3 is detected by comparing the detection signal and a reference signal. Then, the electric current being supplied to the winding 9 is appropriately switched according to the rotary position of the rotor 3 to form a rotating magnetic field, which by turn drive the rotor 3 to rotate.

When such a motor 1 is employed as drive source in an EPS, as the driver of the automobile operates the steering wheel, the motor 1 is driven under control according to the steering angle, the running speed and the like of the automobile. Then, the revolutions of the shaft 5 are transmitted to the steering column of the automobile by way of a reduction gear (not shown). As a result, steering assisting force is supplied to the steering column shaft so that the driver can operate the steering wheel with relatively small power.

However, as the inertia of the rotor 3 increases in such a motor in an EPS, there arises a problem that the responsiveness of the motor falls in the steering operation due to the inertia. In an EPS, as the driver operates the steering wheel and the steering column rotates, the rotor 3 also rotates. Therefore, if the inertia of the rotor 3 is large, the movement of the steering column is retarded under the influence of the inertia so that it may no longer be possible for the driver to get a quick and light steering feeling. Particularly, motors to be used for EPSs have been required to show a high output power in recent years to make the motors relatively bulky. Then, the rotor is made larger accordingly to consequently give rise to a large inertia in the rotor. Thus, the influence of the inertia is no longer negligible.

In an attempt of reducing the inertia of the rotor 3, Jpn. Pat. Appln. Laid-Open Publication No. 9-275652 proposes a rotor of a brushless motor whose weight is reduced by providing in the yoke thereof (which corresponds to the rotor core 6 in FIG. 6) with a slot as space. The inventor of the invention of the above-cited patent document paid attention to the behavior of the line of magnetic force when the motor is driven and succeeded in reducing the inertia without adversely affecting the characteristics of the motor by providing a space in the part that does not operate as magnetic path. Patent Document 1: Jpn. Pat. Appln. Laid-Open Publication No. 9-275652

### Disclosure of the Invention

### Problems to be Solved by the Invention

However, when the rotor core is provided with such a space, the magnetic field of magnetization can easily become uneven when magnetizing the magnets. Although the space is not used as magnetic path when driving the motor, it is not necessarily that the space is unnecessary at the time of magnetization. In other words, when a magnetic field is formed for the purpose of magnetizing the magnets, the magnetic field can become uneven due to the space. As the magnetic field of magnetization becomes uneven, the magnetic characteristics of the magnets can also become uneven to adversely affect the characteristics of the motor. Additionally, the time spent for magnetizing the magnets increases due to the uneven magnetic field to reduce the productivity and increase the energy consumption and hence the running cost of the magnetizing apparatus.

An object of the present invention is to reduce the inertia of a brushless motor without degrading the characteristics of the motor by magnetizing the magnets in a stable magnetic field of magnetization.

### Means for Solving the Problems

A rotor for a brushless motor according to the present invention characterized by comprising a hollow-cylindrical rotor core to be fitted to a rotary shaft and magnets to be fitted to the outer peripheral surface of the rotor core, characterized in that the rotor core has: an outer ring section formed to extend from the outer peripheral surface of the rotor core toward the rotary shaft with a predetermined thickness; a plurality of ribs formed inside the outer ring section and extending from the inner peripheral surface of the outer ring section toward the rotary shaft; and hollow sections formed between the ribs; and the outer diameter ϕn of the hollow sections is defined by ϕc - 2 × 3 wt ≤ ϕn ≤ ϕc - 2 × 1.3 Wt, where ϕc is the outer diameter of the rotor core and Wt is the thickness of the magnets. In this case, preferably, the outer diameter of the hollow sections is defined by ϕc - 2 × 2 Wt ≤ ϕn ≤ ϕc - 2 × 1.3 Wt

According to the present invention, it is possible to secure a uniform magnetic field of magnetization around the magnets with a magnetic flux density sufficient for magnetization at the time of magnetizing the magnets by limiting the outer diameter of the rotor core to the above-defined range. Additionally, it is also possible to suppress any increase in the cogging torque and any reduction in the motor torque by limiting the outer diameter ϕn to the above-defined range.

In a rotor for brushless motor according to the invention, the ribs may be formed at positions located inside the outer ring section relative to the inter-magnet spaces adjacently arranged magnets or the inter-magnetic-polar spaces so as to extend radially from the rotary shaft. In a rotor for a brushless motor according to the invention, the ribs may be arranged so as to be centered respectively at the line segments Lr passing through the middle points of the inter-polar spans Pw of adjacently located magnets and the center O of the rotary shaft. The angular pitch θr of arrangement of the ribs may be made larger than the central angle θm of the magnets (θr > θm).

Additionally, the hollow sections may be formed to show a substantially sector-shaped cross section and arranged on the prolonged lines passing through the polar centers of the magnets. The width Wv of the ribs may be smaller than the thickness Wt of the magnets (Wv ≤ Wt).

### Effects of the Invention

According to the present invention, the rotor core of a rotor to be used for a brushless motor is made to have an outer ring section formed to extend from the outer peripheral surface of the rotor core toward the rotary shaft with a predetermined thickness, a plurality of ribs formed inside the outer ring section and extending from the inner peripheral surface of the outer ring section toward the rotary shaft and hollow sections formed between the ribs and the outer diameter ϕn of the hollow sections is defined by ϕc - 2 × 3 Wt ≤ ϕn ≤ ϕc - 2 × 1.3 Wt (where ϕc is the outer diameter of the rotor core and Wt is the thickness of the magnets). Thus, when magnetizing the magnets, it is possible to form a magnetic field of magnetizing that is not uneven and shows a sufficiently high magnetic flux density around the magnets. Additionally, it is possible to suppress any aggravation of the cogging torque and the motor torque when the outer diameter ϕn is defined to be within the above-cited range.

Thus, it is possible to efficiently magnetize the magnets by means of a stable magnetic field of magnetization, while reducing the inertia by means of the hollow section. Also, it is possible to suppress any aggravation of the cogging torque and the motor torque. Therefore, it is possible to reduce the inertia without reducing the power output while the productivity is improved for magnetization and the energy consumption rate of the magnetizing power source can be reduced.

### Brief Description of the Drawings

[FIG. 1] A schematic illustration of Embodiment 1 of rotor to be used for a brushless motor according to the present invention and arranged in a magnetizing apparatus, showing the structure of the rotor.
[FIG. 2] A graph illustrating the relationship between the magnetic field of magnetization produced by a magnetizing apparatus and the outer diameter ϕn of the hollow sections.
[FIG. 3] A graph illustrating the relationship between the outer diameter ϕn of the hollow sections and the magnetic field of magnetization and also between the outer diameter ϕn of the hollow sections and the cogging torque.
[FIG. 4] A graph illustrating the relationship among the outer diameter ϕn of the hollow sections and the magnetic field of magnetization and also between the outer diameter ϕn of the hollow sections and the motor torque.
[FIG. 5] A schematic illustration of Embodiment 2 of rotor to be used for a brushless motor according to the present invention and arranged in a magnetizing apparatus, showing the structure of the rotor.
[FIG. 6] A schematic illustration of the structure of an ordinary brushless motor.

### Explanation of Reference Symbols

- 1: brushless motor
- 2: magnet
- 3: rotor
- 4: stator
- 5: shaft
- 6: rotor core
- 7: housing
- 8: stator core
- 9: winding
- 10: resolver
- 10a: resolver stator
- 10b: coil
- 10c: resolver rotor
- 11: magnetizing apparatus
- 12: outer ring section
- 12a: inner peripheral surface
- 13: rib
- 14: hollow section
- 15: magnetization yoke
- 16: rotor
- 17: magnet
- 21: bracket
- 22: resolver mount unit
- O: shaft center
- M: prolonged line through magnet pole center
- Pw: inter-polar span
- Cp: middle point of inter-polar span Pw
- Lr: line segment passing through Cp and shaft center
- Wr: thickness of outer ring section
- Wv: rib width
- θm: magnet central angle
- θr: angular pitch of ribs
- ϕc: rotor core outer diameter
- ϕn: hollow section outer diameter
- ϕs: shaft outer diameter

### Best Mode For Carrying Out the Invention

Now, the present invention will be described in greater detail by referring to the accompanying drawings that illustrate preferred embodiments of the invention.

### Embodiment 1

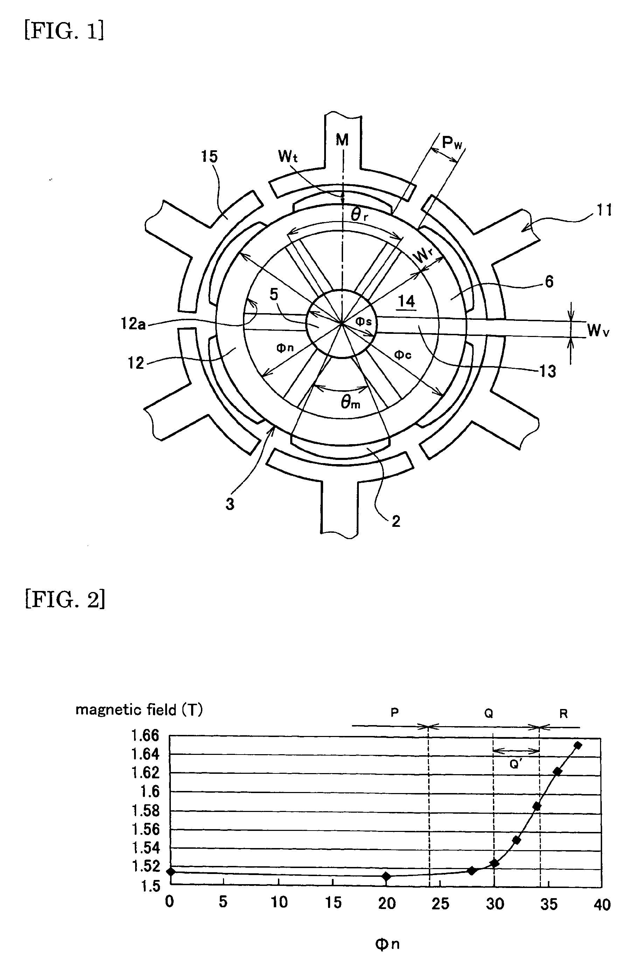

FIG. 1 is a schematic illustration of the rotor 3 of Embodiment 1 to be used for a brushless motor according to the present invention and arranged in a magnetizing apparatus 11, showing the structure of the rotor. The brushless motor that comprises the rotor 3 is structurally identical with the brushless motor of FIG. 6. A metal-made rotor core 6 is fitted to a shaft (rotary shaft) 5. An outer ring section 12 having a thickness of Wr is arranged on the outer periphery of the rotor core 6. In other words, the outer ring section 12 extends toward the shaft 5 from the outer peripheral surface thereof. A total of segment-type six magnets 2, which are ferrite magnets, are fitted to the outer peripheral surface of the outer ring section 12. Each of the magnets 2 has a substantially circular arc cross section and the inner peripheral surface thereof is a circular arc surface with a central angle of θm.

A plurality of (e.g., six) ribs (rib sections) 13 are arranged in the inside of the outer ring section 12. The ribs 13 extend from the inner peripheral surface 12a of the outer ring section 12 toward the shaft 5 and their inner ends are rigidly secured to the shaft 5. The ribs 13 are arranged at regular angular intervals with an angular pitch of θr (which is equal to 60° when the number of ribs is six). Thus, the ribs 13 extend in radial directions from the shaft 5. Each of the ribs 13 is arranged in such a way that a line segment Lr extending from the center of the shaft 5 to the middle point of two adjacently located magnets 2, or the middle point Cp of the inter-polar span Pw, agrees with the center line of the rib 13, and θr is larger than θm (θr > θm). The ribs 13 have a width Wv smaller than the largest thickness Wt of the magnets 2 (Wv ≤ Wt).

The ribs 13 axially extend along the entire length of the rotor core 6 and an axially extending hollow section 14 is formed between any two adjacently located ribs 13. The hollow sections 14 are located right below (above) the respective magnets 2, each of the hollow sections 14 has a sector-shaped cross section with its centerline agreeing with the prolonged line M passing through the polar center of the corresponding magnet 2 and the center of the shaft 5. The outer peripheries of the hollow sections 14 are inner peripheral surfaces 12a of the outer ring section 12 and the outer diameter of the hollow sections (the inner diameter of the outer ring section 12) is expressed by ϕn. If the outer diameter of the rotor core 6 is ϕc, ϕn is defined as ϕc - 2 × 3Wt ≤ ϕn ≤ ϕc - 2 × 1.3Wt, preferably by ϕc - 2 × 2Wt ≤ ϕn ≤ ϕc - 2 × 1.3Wt. Note that ϕc is larger than the outer diameter ϕs of the shaft 5 (ϕc > ϕs).

As seen from FIG. 1, the rotor 3 is set in a magnetizing apparatus 11 when magnetizing the magnets 2. The magnetizing apparatus 11 is provided with substantially T-shaped magnetizing yokes 15 that correspond to the respective magnets 2. The rotor 3 is placed inside the magnetizing yokes 15 in such a way that the magnets 2 are located vis-à-vis the respective magnetizing yokes 15. A magnetically exciting coil (not shown) is arranged around each of the magnetizing yokes 15. A large electric current is momentarily supplied to the exciting coils typically by means of a large capacity capacitance. Then, as a result, a large magnetic field of magnetization is produced in the magnetizing yokes 15 to magnetize the magnets 2 that are made of a magnetic material.

FIG. 2 is a graph illustrating the relationship between the magnetic field of magnetization produced by the magnetizing apparatus 11 and the outer diameter ϕn of the hollow sections (ϕc = 42 mm, Wt = 3 mm). It will be appreciated that the magnetic field of magnetization is not remarkably uneven but the magnetic flux density of the magnetic field of magnetization is low so that it is not possible to efficiently magnetize the magnets in region P in FIG. 2 where ϕn is less than 24 (= ϕc - 2 × 3 Wt = 42 - 2 × 3 × 3). On the other hand, the magnetic flux density of the magnetic field of magnetization is large but the motor output is nevertheless reduced due to magnetic saturation in region R in FIG. 2 where ϕn is larger than 34.2 (= ϕc - 2 × 1.3 Wt = 42 - 2 × 1.3 × 3). To the contrary, it is possible to produce a uniform magnetic field of magnetization showing a magnetic flux density that is sufficiently high for magnetizing the magnets 2 in region Q in FIG. 2 where ϕn is not less than 24 and not more than 34.2, preferably in region Q' in FIG. 2 where ϕn is not less than 30 (= ϕc - 2 × 2 Wt = 42 - 2 × 2 × 3) and not more than 34.2.

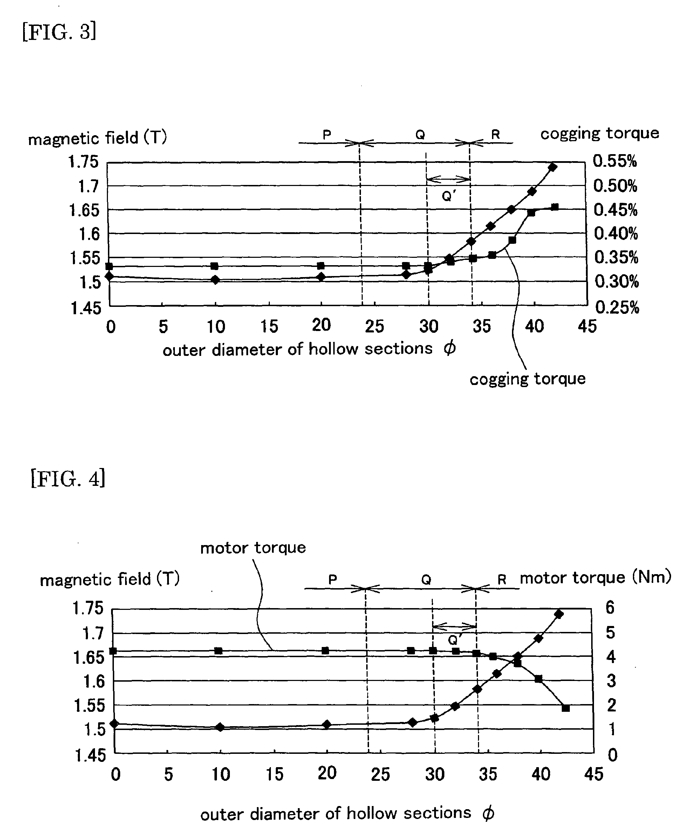

On the other hand, the outer diameter ϕn of the hollow sections influences not only during the magnetizing process but also the cogging torque and the motor torque during the motor driving operation. FIG. 3 is a graph illustrating the relationship between the outer diameter ϕn of the hollow sections and the magnetic field of magnetization and also between the outer diameter ϕn of the hollow sections and the cogging torque and FIG. 4 is a graph illustrating the relationship among the outer diameter ϕn of the hollow sections and the magnetic field of magnetization and also between the outer diameter ϕn of the hollow sections and the motor torque. Note that the relationship between the outer diameter ϕn of the hollow sections and the magnetic field of magnetization of FIG. 2 is substantially maintained in FIGS. 3 and 4.

As seen from FIG. 3, the magnetic flux produced by the magnets 2 is congested to abruptly increase the cogging torque in region R when the hollow sections are too large (and ϕn is too large). The motor torque also abruptly falls in region R. In other words, the characteristics of the motor including the cogging torque and the motor torque are degraded under the condition of ϕn > ϕc - 2 × 1.3 Wt. Note that both the cogging torque and the motor torque do not show any significant difference between region P and region Q. Therefore, it is desirable to suppress the outer diameter ϕn of the hollow sections to not more than ϕc - 2 × 1.3 Wt from the viewpoint of cogging torque and motor torque.

Thus, the unevenness of the magnetic field of magnetization can be reduced by arranging sector-shaped hollow sections 14 immediately below the respective magnets 2 and so defining the outer diameter as to be within the above-cited range. Then, consequently, it is possible to efficiently magnetize the magnets 2 by means of a stable magnetic field of magnetization. Additionally, neither the cogging torque nor the motor torque is aggravated in the above-cited range. Thus, it is possible to achieve an inertia reducing effect by means of the hollow sections 14 without reducing the power output. Then, the productivity is improved and the energy consumption rate of the magnetizing apparatus can be reduced because it is possible to efficiently magnetize the magnets 2. Therefore, the magnetizing operation will be energy saving and it is possible to reduce the produce cost.

### Embodiment 2

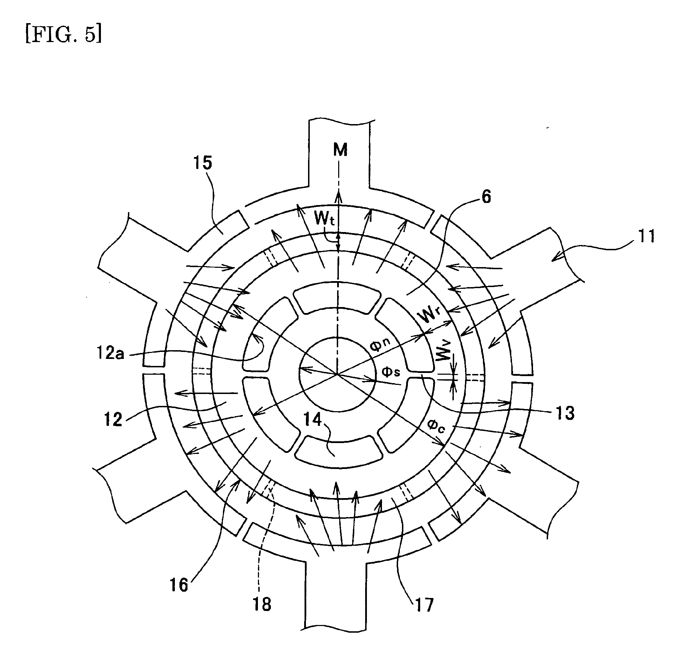

The present invention is applicable not only to rotors formed by using segment type magnets as in the case of Embodiment 1 but also to rotors formed by using a ring type magnet. FIG. 5 is a schematic illustration of Embodiment 2 of rotor to be used for a brushless motor according to the present invention and arranged in a magnetizing apparatus like FIG. 1, showing the structure of the rotor. The components same as or similar to those of Embodiment 1 are denoted respectively by the same reference symbols and will not be described any further.

A ring magnet 17 is fitted to the outer periphery of the rotor core 6 in the rotor 16 of FIG. 5. The ring magnet 17 is magnetized to show six magnetic poles by the magnetizing apparatus 11 and each pole is arranged at regular intervals. Non-magnetized zones 18 are formed between the magnetic poles. Here again, ribs 13 are arranged inside the non-magnetized zones 18 at respective positions corresponding to the inter-polar spans of ring magnet 17. The width Wv of the ribs 13 is not larger than the thickness Wt of the magnet 17 (Wv ≤ Wt). Hollow sections 14 are formed between the ribs 13. Here again, the outer diameter ϕn of hollow sections is defined as ϕc ― 2 × 3 Wt ≤ ϕn ≤ ϕc - 2 × 1.3 Wt, preferably by ϕc ― 2 × 2 Wt ≤ ϕn ≤ ϕc ― 2 × 1.3 Wt.

As shown in FIG. 5, the ring magnet 17 is magnetized in radial directions by the magnetizing apparatus 11. It is possible to reduce the unevenness of the magnetic field of magnetization and efficiently magnetize the magnet 17 in a stable magnetic field of magnetization when the outer diameter of the hollow sections 14 is so defined as to be within the above-cited range as in the case of Embodiment 1. Neither the cogging torque nor the motor torque is aggravated in the above-cited range. Thus, it is possible to achieve an inertia reducing effect by means of the hollow sections 14 without reducing the power output.

The present invention is not limited to the above embodiments but, needless to say, can be variously modified without deviating from the subject matter of the invention.
For example, the numerical values of ϕc and Wt of the above-described embodiments are only cited as examples and the present invention is effectively applicable to rotors having dimensions other than those cited above. While the present invention is applied to a brushless motor to be used for an EPS in each of the above-described embodiments, the present invention is also applicable to brushless motors to be used not only for EPSs but also for industrial machines such as industrial robots, personal computers, peripheral equipment of personal computers and other IT apparatus. While a motor adapted to detect the rotary position of the rotor by means of a resolver is described above as typical brushless motor by referring to FIG. 6, the present invention is also applicable to motors adapted to detect the rotary position of the rotor by means of a magnetic detection element such as a Hall element.

## Claims

1. A rotor for a brushless motor comprising a hollow-cylindrical rotor core to be fitted to a rotary shaft and magnets to be fitted to the outer peripheral surface of the rotor core, **characterized in that**
the rotor core has:
an outer ring section formed to extend from the outer peripheral surface of the rotor core toward the rotary shaft with a predetermined thickness;
a plurality of ribs formed inside the outer ring section and extending from the inner peripheral surface of the outer ring section toward the rotary shaft; and
hollow sections formed between the ribs; and
the outer diameter ϕn of the hollow sections is defined by ϕc - 2 × 3 Wt ≤ ϕn ≤ ϕc - 2 × 1.3 Wt, where ϕc is the outer diameter of the rotor core and Wt is the thickness of the magnets.

2. The rotor according to claim 1, **characterized in that** the outer diameter ϕn of the hollow sections is defined by ϕc - 2 × 2 Wt ≤ ϕn ≤ ϕc - 2 × 1.3 Wt.

3. The rotor according to claim 1 or 2, **characterized in that** the ribs are radially formed at positions located inside the outer ring section relative to the inter-magnet spaces of adjacently arranged magnets or the inter-magnetic-polar spaces so as to extend radially from the rotary shaft.

4. The rotor according to claim 3, **characterized in that** the ribs are arranged so as to be centered respectively at the line segments Lr passing through the middle points Cp of the inter-polar spans Pw of adjacently located magnets and the center O of the rotary shaft.

5. The rotor according to claim 3, **characterized in that** the angular pitch θr of arrangement of the ribs is larger than the central angle θm of the magnets (θr > θm).

6. The rotor according to any one of claims 1 through 5, **characterized in that** the hollow sections are formed to show a substantially sector-shaped cross section and arranged on the prolonged lines passing through the polar centers of the magnets.

7. The rotor according to any one of claims 1 through 6, **characterized in that** the width Wv of the ribs is smaller than the thickness Wt of the magnets (Wv ≤ Wt).
